# EUROPÄISCHE PATENTSCHRIFT

(11) **EP 3 895 889 B1**
(45) Veröffentlichungstag und Bekanntmachung des Hinweises auf die Patenterteilung: **27.04.2022**
(21) Anmeldenummer: 20000393.7
(22) Anmeldetag: 31.10.2020
(51) Int. Cl.: B32B 17/10, E06B 3/02

(54) **GANZGLAS-TÜRANLAGE MIT EINEM OBERLICHTELEMENT AUS 3-FACH VERBUNDGLAS**
PLATE GLASS DOOR SYSTEM WITH A SKYLIGHT ELEMENT MADE FROM 3-FOLD LAMINATED GLASS
INSTALLATION DE PORTE TOUT EN VERRE DOTÉE D'UN ÉLÉMENT LANTERNEAU EN VERRE FEUILLETÉ TRIPLE

(30) Priorität: 15.04.2020 DE 202020001543 U
(43) Veröffentlichungstag der Anmeldung: 20.10.2021
(73) Patentinhaber: Rienth GmbH & Co. KG, 71364 Winnenden (DE)
(72) Erfinder: FRIZ, Klaus, 73663 Berglen (DE); RIENTH, Thomas, 70197 Stuttgart (DE)

(56) Entgegenhaltungen:
- EP-A2- 2 264 271
- DE-A1- 1 659 947
- DE-B- 1 212 274
- GB-A- 2 515 339

## Beschreibung

Die Erfindung betrifft eine Ganzglas-Türanlage für den Innenbereich, die gemäß Oberbegriff des Anspruchs 1 eine aus Verbundglaselementen aufgebaute Glaswand mit einer zargenlosen Türöffnung und einem darin schwenkbar angeordneten rahmenlosen Türelement aus Verbundglas aufweist.

Ganzglas-Türanlagen betreffender Art werden bspw. zur Raumtrennung bzw. Raumabtrennung im Innenbereich von Gebäuden verbaut. Durch den Entfall einer Türzarge bzw. eines Türrahmens und durch die Verwendung eines rahmenlosen Türelements (sogenannte Ganzglastüre) ergeben sich eine schattenfreie Lichtdurchflutung und ein sehr ästhetisches Erscheinungsbild.

Die AT 508 030 A4 beschreibt eine insbesondere für den Sanitärbereich geeignete Ganzglas-Türanlage, die grundsätzlich aus einem Rahmenelement (1) und einem darin schwenkbar angeordneten Türelement (2) besteht. Das Rahmenelement (1) besteht aus einem ersten Seitenteil (3), einem zweiten Seitenteil (4) und einem Oberlichtelement (5). Sowohl das Rahmenelement (1) als auch das Türelement (2) können aus Verbundsicherheitsglas hergestellt sein. Im Übergangsbereich zwischen Oberlichtelement (5) und Türelement (2) ist (ohne Türzarge) ein Falz (9) mit einem Spalt (14) ausgebildet, wobei der Spalt (14) jedoch so gering ist, dass sich eventuell auftretendes Kondenswasser durch Kapillarwirkung in diesem Spalt (14) verteil und damit (ohne Dichtungselement) eine natürliche Abdichtung bewirkt. Ein Falz zwischen dem Türelement (2) und dem ersten Seitenteil (3) sowie dem zweiten Seitenteil (4) ist in analoger Weise gestaltet.

Ausgehend von diesem Stand der Technik liegt der Erfindung die Aufgabe zugrunde, eine Ganzglas-Türanlage betreffender Art bereitzustellen, die eine sehr gute Schalldämmung ermöglicht.

Die Aufgabe wird gelöst durch die erfindungsgemäße Ganzglas-Türanlage des Anspruchs 1. Zusätzliche Merkmale ergeben sich aus den abhängigen Ansprüchen, der nachfolgenden Erfindungsbeschreibung und den Figuren.

Die erfindungsgemäße Ganzglas-Türanlage für den Innenbereich hat eine aus Verbundglaselementen aufgebaute Glaswand (in der AT 508 030 A4 als Rahmenelement bezeichnet), die (wenigstens) eine zargenlose Türöffnung aufweist, und ein darin (d. h. in der Türöffnung) schwenkbar angeordnetes rahmenloses Türelement (Türblatt) aus Verbundglas bzw. eine rahmenlose Verbundglastür. Die Glaswand umfasst ein erstes Seitenteilelement (aus Verbundglas) und ein zweites Seitenteilelement (aus Verbundglas), die beidseitig bzw. zu beiden Seiten, d. h. rechts- und linksseitig, neben der Türöffnung angeordnet sind, sowie ein Oberlichtelement (aus Verbundglas), das oberhalb der Türöffnung fest (bzw. unbeweglich) zwischen den beiden Seitenteilelementen angeordnet ist, sodass die beiden Seitenteilelemente und das Oberlichtelement quasi die zargenlose Türöffnung bilden bzw. umranden.

Erfindungsgemäß ist das Oberlichtelement aus einem 3-fach-Verbundglas gefertigt und (an seinen Rändern bzw. in seinen Randbereichen) mit einem Falzwechsel (genau genommen mit einem Stufenfalzwechsel, wie nachfolgend noch näher erläutert) ausgebildet, derart, dass die äußere Glasscheibe beidseitig bzw. zu beiden Seiten, d. h. rechts- und linksseitig, über die mittlere und innere Glasscheibe übersteht, wodurch Gegenfalze (genau genommen Gegenstufenfalze) für die Verbindung mit den Seitenteilelementen gebildet sind, und dass die innere Glasscheibe nach unten über die mittlere und äußere Glasscheibe übersteht, wodurch ein Gegenfalz (genau genommen ein Gegenstufenfalz) für das Türelement gebildet ist. Gleichwirkend kann das Oberlichtelement auch aus einem 4-fach-Verbundglas gefertigt sein und zwei mittlere Glasscheiben (Zwischenglasscheiben) aufweisen.

Bei der erfindungsgemäßen Ganzglas-Türanlage sind die Seitenteilelemente, das Oberlichtelement und auch das Türelement aus Verbundglas gefertigt, die daher auch als Verbundglaselemente bezeichnet werden können. Unter einem Verbundglas wird eine aus wenigstens zwei einzelnen Glasscheiben (Flachglasscheiben) gebildete Verbundglasscheibe verstanden, wobei die (einzelnen) Glasscheiben jeweils durch eine klebfähige Zwischenschicht (bspw. eine Kunststofffolie), die insbesondere auch schalldämmende Eigenschaften haben kann (Schalldämmfolie), flächig verbunden sind, sodass sich ein laminatartiger Aufbau ergibt. Bevorzugt handelt es sich bei dem Verbundglas um ein sogenanntes Verbundsicherheitsglas (VSG), d. h., die Seitenteilelemente, das Oberlichtelement und/oder das Türelement sind bevorzugt aus Verbundsicherheitsglas gefertigt. Die Zwischenschicht bzw. Zwischenschichten ist/sind bevorzugt transparent, d. h. durchsichtig, kann/können aber auch undurchsichtig, bspw. milchig, ausgebildet sein. Die Glasscheiben sind bevorzugt als Klarglasscheiben ausgebildet, können aber auch eingefärbt bzw. farbig sein. Ferner kann auch ein, zumindest bereichsweise aufgebrachter, Abdeckdruck oder dergleichen vorgesehen sein. Insbesondere kann eine sogenannte Randbedruckung vorgesehen sein, mit der bspw. eine Türdichtung (s. u.) verdeckt werden kann.

Ein 2-fach-Verbundglas ist aus zwei Glasscheiben (mit einer außenliegenden Glasscheibe und einer innenliegenden Glasscheibe; s. u.) gebildet, ein 3-fach-Verbundglas ist aus drei Glasscheiben (mit einer außenliegenden Glasscheibe, einer innenliegenden Glasscheibe und einer dazwischen liegenden mittleren Glasscheibe bzw. Zwischenglasscheibe) gebildet usw. Ein Verbundglas (bzw. eine Verbundglasscheibe) ist zu unterscheiden von einem sogenannten Isolierglas (bzw. einer Isolierglasscheibe), welches typischerweise für andere Einsatzzwecke, nämlich zur Wärmeisolierung, insbesondere im Außenbereich, verwendet wird.

Das Türelement ist, wie bereits erläutert, rahmenlos, d. h. ohne umgebenden Rahmen, ausgebildet. Typischerweise sind auch die anderen Verbundglaselemente, d. h. die Seitenteilelemente und/oder das Oberlichtelement, rahmenlos ausgebildet und können daher auch als rahmenlose Seitenteilelemente bzw. als rahmenloses Oberlichtelement oder zusammenfassend als rahmenlose Verbundglaselemente bezeichnet werden.

Beim Oberlichtelement der erfindungsgemäßen Ganzglas-Türanlage weist die äußere bzw. außenliegende Glasscheibe in Türöffnungsrichtung, also zum Raum in den hinein das Türelement bzw. die Verbundglastür geöffnet wird. Dementsprechend weist die innere bzw. innenliegende Glasscheibe in Türschließrichtung, was sich auch zwingend dadurch ergibt, dass erfindungsgemäß die innere Glasscheibe einen Gegenfalz für das (geschlossene bzw. eingeschlagene) Türelement, genau genommen für den oberen Rand bzw. für die obere Kante des Türelements, bildet (ähnlich wie in Fig. 2 der AT 508 030 A4 gezeigt). Selbiges gilt analog auch für die Seitenteilelemente und das Türelement. (Die Bezeichnungen "innere Glasscheibe" und "äußere Glasscheibe" werden häufig auch anders verwendet, wobei im Rahmen der Erfindung analog zur AT 508 030 A4 die o. g. Definitionen gelten sollen.)

Typischerweise sind die Seitenteilelemente, das Oberlichtelement und das Türelement der erfindungsgemäßen Ganzglas-Türanlage an ihren einander zugewandten Rändern bzw. in den betreffenden Randbereichen mit Falzen, genau genommen mit Stufenfalzen, ausgebildet. Dadurch sind komplementäre Falze und Gegenfalze mit korrespondierenden Anschlag- bzw. Anlageflächen gebildet, wie nachfolgend noch näher erläutert. Die Falze bzw. Stufenfalze sind insbesondere durch überstehende bzw. zurückversetzte Glasscheiben der Verbundglasscheiben gebildet, wie bereits in der AT 508 030 A4 gezeigt und beschrieben.

Die erfindungsgemäße Beschaffenheit des Oberlichtelements ermöglicht einerseits, dass die Ganzglas-Türanlage (bei geschlossenem bzw. eingeschlagenem Türelement) innen- und außenflächig (d. h. gemäß vorausgehender Definition an der inneren Wandfläche bzw. Innenfläche und an der äußeren Wandfläche bzw. Außenfläche) plan bzw. flächenbündig, d. h. völlig eben und ohne vorstehende bzw. vorspringende Glaskanten, ausgebildet werden kann. Dadurch ergibt sich ein ästhetisches Erscheinungsbild. Außerdem wird auch die Unfall- bzw. Verletzungsgefahr erheblich verringert. Andererseits wird ermöglicht, dass zwischen den korrespondierenden Anschlag- bzw. Anlageflächen der Türöffnung und dem Türelement ein, insbesondere nur ein, umlaufendes Dichtungselement, womit ein dreiseitig (d. h. seitlich und oben) umlaufendes Dichtungselement gemeint ist, zur Schalldämmung vorgesehen werden kann, was einen entsprechenden Einbauraum bzw. Dichtungsspalt erfordert. Mit anderen Worten: Die erfindungsgemäße Beschaffenheit des Oberlichtelements ermöglicht bei planer bzw. flächenbündiger Innen- und Außenfläche der Ganzglas-Türanlage bzw. deren Glaswand die Anordnung eines dreiseitig umlaufenden Dichtungselements an der Türöffnung und/oder am Türelement zur Schalldämmung, wobei durch eine solche Türdichtung insgesamt eine sehr gute Schalldämmung erreicht werden kann. Die erfindungsgemäße Ganzglas-Türanlage weist bevorzugt einen Schalldämmwert R_{W} ≥ 35 dB, insbesondere R_{W} ≥ 39 dB, auf.

Erfindungsgemäss ist vorgesehen, dass die Seitenteilelemente, das Oberlichtelement und das Türelement (im geschlossenen bzw. eingeschlagenem Zustand) sowohl innenflächig (d. h. an der Innenfläche der Ganzglas-Türanlage) als auch außenflächig (d. h. an der Außenfläche der Ganzglas-Türanlage) durch entsprechende Ausgestaltung und Anordnung dieser Verbundglaselemente zueinander plan bzw. flächenbündig sind, wie obenstehend erläutert.

Es ist auch vorgesehen, dass an der Türöffnung, insbesondere in einem dreiseitig (d. h. seitlich und oben) umlaufenden Falz bzw. Stufenfalz der Türöffnung, und/oder am Türelement, insbesondere in einem dreiseitig umlaufenden Falz bzw. Stufenfalz des Türelements, ein dreiseitig umlaufendes Dichtungselement zur Schalldämmung angeordnet bzw. angebracht, insbesondere angeklebt, ist. Bei diesem Schalldämmungs-Dichtungselement handelt es sich bevorzugt um eine Elastomerdichtung, bspw. um eine Silikondichtung, die insbesondere aus einem transparenten Material gebildet ist. Das Dichtungselement kann einstückig, d. h. an einem Stück, ausgebildet sein. Das Dichtungselement kann auch aus mehreren Dichtungselementabschnitten gebildet sein, welche, insbesondere auch wechselseitig, sowohl an der Türöffnung als auch am Türelement angeordnet, insbesondere angeklebt, sein können.

Bevorzugt sind die Seitenteilelemente an ihren der Türöffnung zugewandten (vertikalen) Rändern bzw. in den vertikalen Randbereichen mit Falzen (Stufenfalzen) ausgebildet. Diese Falze und der erfindungsgemäß durch unteren Überstand der inneren Glasscheibe des Oberlichtelements gebildete Falz bilden zusammen einen die Türöffnung (dreiseitig) umlaufenden Falz bzw. Gegenfalz mit Anschlag- bzw. Anlageflächen für das Türelement.

Bevorzugt sind die Seitenteilelemente an ihren der Türöffnung und dem Oberlichtelement zugewandten (vertikalen) Rändern bzw. in den betreffenden Randbereichen mit durchgängigen Falzen bzw. Stufenfalzen ausgebildet, wobei diese durchgängigen Falze im unteren Bereich als Anschlag- bzw. Anlageflächen für das Türelement fungieren und im oberen Bereich als Anlage- bzw. Verbindungsflächen für das Oberlichtelement, welches erfindungsgemäß durch rechts- und linksseitigen Überstand der äußeren Glasscheibe mit entsprechenden Gegenfalzen ausgebildet ist, vorgesehen sind.

Bevorzugt sind die Seitenteilelemente aus 2-fach-Verbundglas gefertigt. Die Seitenteilelemente können aber auch aus 3-fach-Verbundglas gefertigt sein. Das Türelement kann aus 2-fach-Verbundglas gefertigt sein, wobei insbesondere vorgesehen ist, dass die äußere Glasscheibe flächengrößer ausgebildet ist als die innere Glasscheibe und dreiseitig (d. h. seitlich und oben) umlaufend über die innere Glasscheibe übersteht, wodurch ein dreiseitig umlaufender Falz bzw. Stufenfalz gebildet ist. (Dieses Türelement kann auch als "gefälzte Türe" bezeichnet werden.) Das Türelement kann aber auch aus 3-fach-Verbundglas gefertigt sein, wobei insbesondere vorgesehen ist, dass die äußere Glasscheibe flächengrößer ausgebildet ist als die mittlere und innere Glasscheibe und dreiseitig umlaufend über die mittlere und innere Glasscheibe übersteht, wodurch ein dreiseitig umlaufender Falz bzw. Stufenfalz gebildet ist. Die mittlere Glasscheibe eines aus 3-fach-Verbundglas gefertigten Türelements, die sich zwischen der äußeren und inneren Glasscheibe befindet, kann aus sogenanntem Crashglas bzw. Bruchglas bestehen. Das Crash- bzw. Bruchglas bietet nicht nur einen Sichtschutz, sondern kann überraschend auch die Schalldämmung verbessern. Auch die mittlere Glasscheibe bzw. Zwischenglasscheibe des Oberlichtelements kann aus Crash- bzw. Bruchglas bestehen.

Bevorzugt sind alle Verbundglaselemente der erfindungsgemäßen Ganzglas-Türanlage, zumindest die Seitenteilelemente, das Oberlichtelement und das Türelement, mit gleichen Dicken, d. h. mit gleichen bzw. einheitlichen Verbundglasscheibendicken, ausgebildet. Die Verbundglasscheiben können bevorzugt eine einheitliche Dicke zwischen 14 mm und 20 mm aufweisen und weisen insbesondere eine einheitliche Dicke von ca. 16 mm auf.

Bevorzugt ist das Türelement mittels wenigstens zwei Türbänder bzw. Glastürbänder schwenkbar an einem der Seitenteilelemente befestigt, wobei die Türbänder für eine flächenbündige Ausrichtung zwischen dem (geschlossenen bzw. eingeschlagenen) Türelement und dem Seitenteilelement ausgebildet sind, wie bspw. in den Figuren gezeigt.

Die erfindungsgemäße Ganzglas-Türanlage wird nachfolgend anhand eines in den Figuren gezeigten Ausführungsbeispiels näher erläutert. Die in den Figuren gezeigten und/oder nachfolgend erläuterten Merkmale können, auch unabhängig von bestimmten Merkmalskombinationen, allgemeine Merkmale der Erfindung sein und die Erfindung entsprechend weiterbilden.
- Fig. 1: zeigt in einer Vorder- bzw. Frontansicht eine erfindungsgemäße Ganzglas-Türanlage für den Innenbereich bzw. Innenausbau im Einbauzustand.
- Fig. 2: zeigt eine Schnittansicht (Horizontalschnitt) durch das Oberlichtelement der Ganzglas-Türanlage aus Fig. 1 gemäß dem angegebenen Schnittverlauf A-A.
- Fig. 3: zeigt eine Schnittansicht (Vertikalschnitt) durch das Oberlichtelement und durch das Türelement der Ganzglas-Türanlage aus Fig. 1 gemäß dem angegebenen Schnittverlauf G-G.
- Fig. 4: zeigt eine Schnittansicht (Horizontalschnitt) durch das Türelement und das linke Seitenteilelement der Ganzglas-Türanlage aus Fig. 1 gemäß dem angegebenen Schnittverlauf E-E.
- Fig. 5: zeigt eine Schnittansicht (Horizontalschnitt) durch das Türelement und das rechte Seitenteilelement der Ganzglas-Türanlage aus Fig. 1 gemäß dem angegebenen Schnittverlauf F-F.
- Fig. 6: zeigt verschiedene Ansichten des Oberlichtelements der Ganzglas-Türanlage aus Fig. 1.

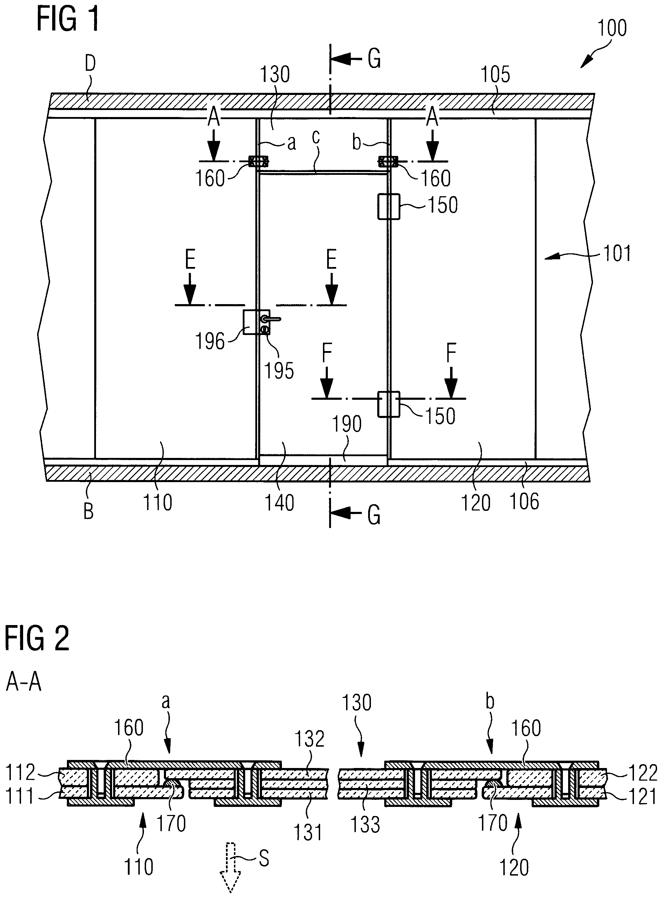

Die in Fig. 1 mit Blickrichtung auf die Innenfläche gezeigte Ganzglas-Türanlage 100 weist eine fest verbaute, sich vertikal zwischen dem Gebäudeboden B und der Gebäudedecke D erstreckende Glaswand bzw. Ganzglaswand 101 auf, mit einer zargenlosen Türöffnung und einem darin schwenkbar angeordneten rahmenlosen Türelement (Glastür bzw. Glastürblatt) 140. Die Glaswand 101 umfasst ein erstes (gemäß Darstellung linkes) Seitenteilelement 110, ein zweites (rechtes) Seitenteilelement 120, die beidseitig neben der Türöffnung angeordnet sind, sowie ein Oberlichtelement 130, das oberhalb der Türöffnung fest bzw. unbeweglich zwischen den beiden Seitenteilelementen 110, 120 angeordnet ist.

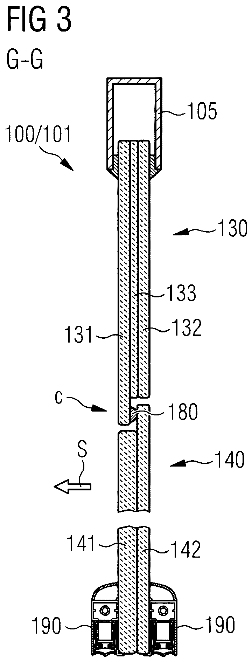

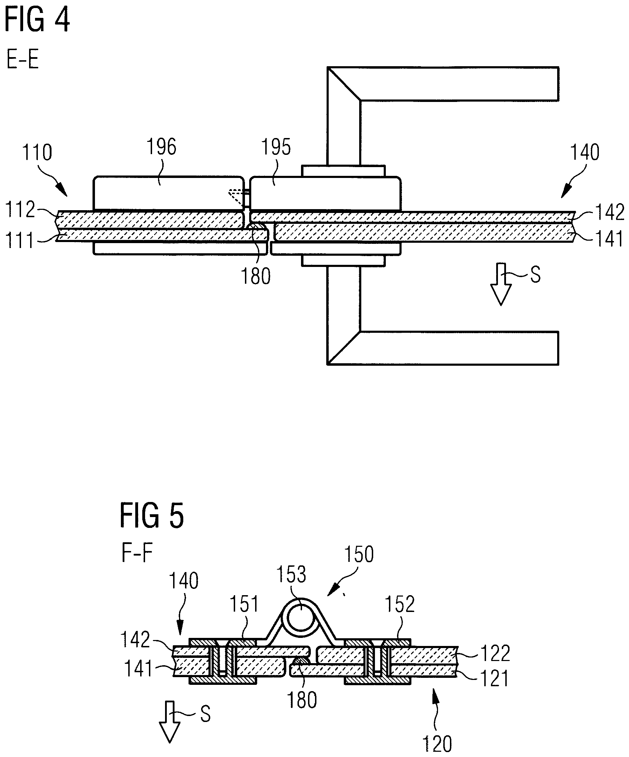

Das Türelement 140 ist mittels sogenannter Türbänder (Glastürbänder) 150 beispielhaft am zweiten Seitenteilelement 120 schwenkbar befestigt (siehe auch Fig. 5). Das Oberlichtelement 130 ist mittels sogenannter Oberlichtverbinder (Glasoberlichtverbinder) 160 starr an den Seitenteilelementen 110, 120 befestigt (siehe auch Fig. 2). Das Türelement 140 ist rechteckig ausgebildet, kann aber, bei entsprechender Ausgestaltung des Oberlichtelements 130, bspw. auch mit einem Rundbogen ausgebildet sein (sogenannte Rundbogentür). Am Türelement 140 ist wenigstens eine Bodendichtung (Glastürbodendichtungen) 190 mit einer selbstabsenkenden Dichtleiste angeordnet, die insbesondere außenflächig angebracht ist. Am Türelement 140 können auch zwei baugleiche Bodendichtungen (Glastürbodendichtungen) 190 mit selbstabsenkenden Dichtleisten angeordnet sein, die innen- und außenflächig angebracht sind (siehe auch Fig. 3). Am Türelement 140 ist ferner auch ein Türschloss (Glastürschloss) 195 angeordnet. Am ersten Seitenteilelement 110 ist ein mit dem Türschloss 195 korrespondierender Gegenkasten 196 angeordnet.

Die Seitenteilelemente 110, 120, das Oberlichtelement 130 und das Türelement 140 sind jeweils aus Verbundglas gefertigt und können daher auch als Verbundglaselemente bezeichnet werden. Diese Verbundglaselemente sind, abgesehen von einem Decken- und Bodenanschluss 105, 106, rahmenlos, d. h. jeweils ohne umgebenden Rahmen, ausgebildet.

Bei dem gezeigten Ausführungsbeispiel der Ganzglas-Türanlage 100 sind sowohl die Seitenteilelemente 110, 120 als auch das Türelement 140 aus 2-fach-Verbundglas (Zweifachverbundglas) gefertigt und weisen bezüglich der Schließrichtung bzw. Schließschwenkrichtung S des Türelements 140 jeweils eine innere Glasscheibe 111, 121, 141 und eine äußere Glasscheibe 112, 122, 142 auf (siehe Fig. 2 bis Fig. 5), die unterschiedlich dick sind. Bei den Seitenteilelementen 110, 120 sind die inneren Glasscheiben 111, 121 dünner als die äußeren Glasscheiben 112, 122 ausgebildet. Beim Türelement 140 ist entgegengesetzt zu den Seitenteilelementen 110, 120 die innere Glasscheibe 141 dicker als die äußere Glasscheibe 142 ausgebildet.

Das Oberlichtelement 130 ist hingegen aus einem 3-fach-Verbundglas (Dreifachverbundglas) gefertigt und weist bezüglich der Schließrichtung S des Türelements 140 eine innere Glasscheibe 131, eine äußere Glasscheibe 132 und eine mittlere Glasscheibe bzw. Zwischenglasscheibe 133 auf (siehe Fig. 2 und Fig. 3), die hier in etwa gleich dick sind.

Die Seitenteilelemente 110, 120, das Oberlichtelement 130 und das Türelement 140 sind an ihren einander zugewandten Rändern bzw. in den betreffenden Randbereichen mit Falzen bzw. Stufenfalzen ausgebildet, wie in Fig. 1 durch die Doppellinien veranschaulicht. Das Türelement 140 ist mit einem dreiseitig umlaufenden Falz bzw. Stufenfalz, womit ein an den seitlichen Rändern und am oberen Rand ausgebildeter Falz gemeint ist, ausgebildet, indem dessen äußere Glasscheibe 142 flächengrößer als die innere Glasscheibe 141 ausgebildet ist und dreiseitig umlaufend über die innere Glasscheibe 141 übersteht (wie in Fig. 3 bis Fig. 5 gezeigt). Die Seitenteilelemente 110, 120 sind mit (vertikal) durchgängigen Falzen bzw. Stufenfalzen ausgebildet (siehe Fig. 1), wobei diese durchgängigen Falze im unteren Bereich, d. h. im Bereich der Türöffnung, als Anschlag- bzw. Anlageflächen für das schwenkbare Türelement 140 vorgesehen sind und im oberen Bereich, d. h. im Bereich des Oberlichtelements 130, als Anlage- bzw. Verbindungsflächen für das fest verbaute Oberlichtelement 130 fungieren.

Das aus einem 3-fach-Verbundglas gefertigte Oberlichtelement 130 ist mit einem Falzwechsel ausgebildet, derart, dass dessen äußere Glasscheibe 132 an den seitlichen Vertikalrändern bzw. in den vertikalen Randbereichen a, b beidseitig, d. h. nach links und rechts, über die mittlere Glasscheibe 133 und innere Glasscheibe 131 übersteht, wodurch Gegenfalze für die Verbindung mit den Seitenteilelementen 110, 120 gebildet sind (siehe Fig. 2), und dass dessen innere Glasscheibe 131 am unteren Horizontalrand bzw. im unteren horizontalen Randbereich c nach unten über die mittlere Glasscheibe 133 und äußere Glasscheibe 132 übersteht, wodurch ein Gegenfalz bzw. Gegenstufenfalz für das Türelement 140 gebildet ist, an dem der obere gefälzte Rand des Türelements 140 anschlägt bzw. anliegt (siehe Fig. 3).

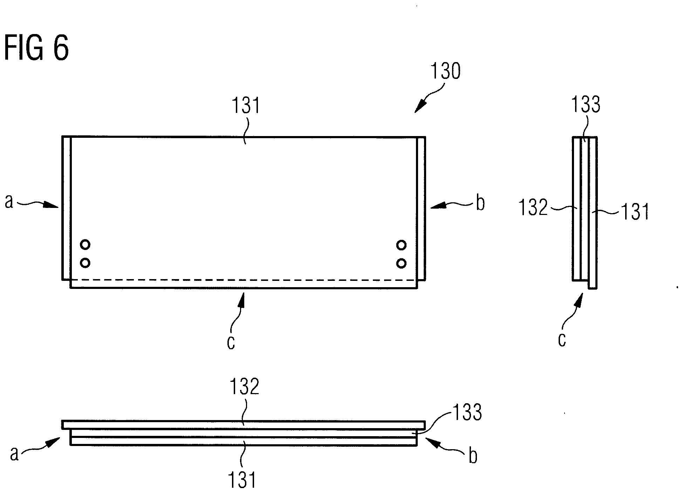

Fig. 6 zeigt das Oberlichtelement 130 in einer Vorder- bzw. Frontansicht gemäß Fig. 1 sowie in einer Draufsicht und in einer Seitenansicht von links. Die seitlichen Falze bzw. Gegenfalze in den vertikalen Randbereichen a, b werden durch die äußere Glasscheibe 132 gebildet (siehe auch Fig. 2). Der untere horizontale Falz bzw. Gegenfalz im Randbereich c wird durch die innere Glasscheibe 131 gebildet (siehe auch Fig. 3). Zwischen den seitlichen vertikalen Randbereichen a, b und dem unteren horizontalen Randbereich c besteht somit ein Falzwechsel (genau genommen ein Stufenfalzwechsel), wobei die seitlichen Falze bzw. Gegenfalze und der untere Falz bzw. Gegenfalz quasi in entgegensetzte Richtungen weisen.

Diese erfindungsgemäße Ausgestaltung des Oberlichtelements 130 ermöglicht einerseits eine plane bzw. flächenbündige Anordnung aller Verbundglaselemente, womit gemeint ist, dass die Seitenteilelemente 110, 120, das Oberlichtelement 130 und das geschlossene bzw. eingeschlagene Türelement 140 sowohl an der Innenfläche als auch an der Außenfläche der Ganzglas-Türanlage 100 bzw. der Glaswand 101 zueinander flächenbündig sind. Die Seitenteilelemente 110, 120, das Oberlichtelement 130 und das Türelemente 140 sind hierzu mit gleichen bzw. einheitlichen Verbundglasscheibendicken (bspw. von 14 mm bis 20 mm, insbesondere 16 mm, womit die Gesamtdicke gemeint ist) ausgebildet und quasi in einer Ebene ohne vorstehende bzw. vorspringende Glaskanten angeordnet (wie in Fig. 2 bis Fig. 5 gezeigt).

Diese erfindungsgemäße Ausgestaltung des Oberlichtelements 130 ermöglicht andererseits, trotz planem bzw. flächenbündigem Aufbau der Ganzglas-Türanlage 100, die Anordnung einer dreiseitig umlaufenden Türdichtung zur Schalldämmung. Bei dem gezeigten Ausführungsbeispiel ist als Türdichtung ein Dichtungselement 180 im dreiseitig umlaufenden Falz der Türöffnung, der durch die vertikalen Falze der Seitenteilelemente 110, 120 und durch den horizontalen Falz bzw. Gegenfalz am unteren Rand bzw. im unteren Randbereich c des Oberlichtelements 130 gebildet ist, befestigt und dichtet gegen den umlaufenden Falz des Türelements 140 ab, wie in Fig. 3 bis Fig. 5 gezeigt und nachfolgend noch näher erläutert. Ein Dicht- bzw. Anlegedruck kann mithilfe des Türschlosses 195 erzeugt werden. Das Dichtungselement 180 ist beispielhaft als Wulstdichtung ausgebildet, kann aber z. B. auch als Lippendichtung oder Ähnliches ausgebildet sein. Das Dichtungselement 180 kann auch am Türelement 140, d. h. im umlaufenden Falz des Türelements 140, befestigt sein. Am unteren Rand des Türelements 140 kann eine Schalldämmung mithilfe der Bodendichtung(en) 190 erfolgen, sodass das geschlossene bzw. eingeschlagene Türelement 140 quasi vierseitig umlaufend bzw. vollumfänglich schallgedämmt ist. Dadurch können Schalldämmwerte von R_{W} ≥ 35 dB erreicht werden.

Fig. 3 zeigt die Anordnung des Dichtungselements 180 am unteren Falz bzw. Gegenfalz des Oberlichtelements 130, welches gegen den gefälzten oberen Rand des Türelements 140 abdichtet. Der an dieser Stelle für den Einbau des Dichtungselements 180 erforderliche Einbauraum bzw. Dichtungsspalt wird quasi dadurch geschaffen, dass am unteren Rand bzw. im unteren Randbereich c des Oberlichtelements 130 die mittlere Glasscheibe 133 (zusammen mit der äußeren Glasscheibe 132) gegenüber der inneren Glasscheibe 131 (nach oben) zurückversetzt ist. Die innere Glasscheibe 131 des Oberlichtelements 130, das Dichtungselement 180 und die äußere Glasscheibe 142 des Türelements 140 sind zusammen so dick, wie das Verbundglas des Oberlichtelements 130 oder wie das Verbundglas des Türelements 140.

Fig. 4 zeigt die Anordnung des Dichtungselements 180 am linken Seitenteilelement 110, welches gegen den gefälzten (linken) Seitenrand des Türelements 140 abdichtet. In analoger Weise erfolgt die Abdichtung bzw. Schalldämmung am anderen (rechten) Seitenrand des Türelements 140, wie in Fig. 5 gezeigt. Im Übrigen gelten analog die Erläuterungen des vorausgehenden Absatzes zur Abdichtung des Türelements 140 gegenüber dem Oberlichtelement 130.

Auch in den Falzverbindungen zwischen dem Oberlichtelement 130 und den Seitenteilelementen 110, 120 sind Dichtungselemente 170 angeordnet (siehe Fig. 2), die einer Schalldämmung und/oder einer zusätzlichen Verklebung (d. h. zusätzlich zu den Oberlichtverbindern 160) dienen. Diese quasi als Oberlichtdichtungen fungierenden Dichtungselemente 170 sind beispielhaft als Wulstdichtungen ausgebildet, können aber z. B. auch als Lippendichtungen oder Ähnliches ausgebildet sein. Die verbleibenden Spalte (siehe Fig. 2) können mit einer Dichtmasse, bspw. Silikon, aufgefüllt werden.

Das dreiseitig umlaufende Dichtungselement 180 der Türdichtung kann einstückig oder auch aus mehreren Dichtungselementabschnitten gebildet sein. Ebenso ist denkbar, in den durchgängigen Falzen bzw. Stufenfalzen der Seitenteile 110, 120 durchgängige (einstückige oder mehrstückige) Dichtungselemente anzuordnen, die im unteren Bereich seitliche Türdichtungen und im oberen Bereich Oberlichtdichtungen bilden, wobei ferner im unteren Falz bzw. Gegenfalz des Oberlichtelements 130 (oder alternativ im oberen Falz des Türelements 140) ein Dichtungselement angeordnet wird, welches eine obere Türdichtung bildet.

Fig. 5 zeigt die Ausgestaltung der außenflächig montierten Türbänder (Glastürbänder) 150, mit einer ersten abgewinkelten Anlageplatte 151, welche am Türelement bzw. an der Glastür 140 befestigt ist, und einer zweiten abgewinkelten Anlageplatte 152, welche am rechten Seitenteilelement 120 befestigt ist. Die Anlageplatten 151, 152 sind mittels Schwenkgelenk 153 gelenkig bzw. verschwenkbar verbunden. Die Türbänder 150 sind durch entsprechende, insbesondere symmetrische, Ausgestaltung der abgewinkelten Anlageplatten 151, 152 für eine flächenbündige Ausrichtung zwischen dem (geschlossenen) Türelement 140 und dem Seitenteilelement 120 ausgebildet, derart, dass die Anlageplatten 151, 152 bei geschlossenem Türelement 140 in einer Ebene liegen, wie gezeigt.

### BEZUGSZEICHENLISTE

- 100: Ganzglas-Türanlage
- 101: Glaswand
- 105: Deckenanschluss
- 106: Bodenanschluss
- 110: Seitenteilelement
- 111: innere Glasscheibe
- 112: äußere Glasscheibe
- 120: Seitenteilelement
- 121: innere Glasscheibe
- 122: äußere Glasscheibe
- 130: Oberlichtelement
- 131: innere Glasscheibe
- 132: äußere Glasscheibe
- 133: mittlere Glasscheibe (Zwischenglasscheibe)
- 140: Türelement (Glastür)
- 141: innere Glasscheibe
- 142: äußere Glasscheibe
- 150: Türband
- 151: Anlageplatte
- 152: Anlageplatte
- 153: Schwenkgelenk
- 160: Oberlichtverbinder
- 170: Dichtungselement (Oberlichtdichtung)
- 180: Dichtungselement (Türdichtung)
- 190: Bodendichtung
- 195: Türschloss
- 196: Gegenkasten
- S: Türschließrichtung
- a: Rand/Randbereich (links)
- b: Rand/Randbereich (rechts)
- c: Rand/Randbereich (unten)

## Patentansprüche

1. Ganzglas-Türanlage (100) für den Innenbereich, mit einer aus Verbundglaselementen aufgebauten Glaswand (101), die eine zargenlose Türöffnung aufweist, und einem darin schwenkbar angeordneten rahmenlosen Türelement (140) aus Verbundglas,
wobei die Glaswand (101) ein erstes Seitenteilelement (110) und ein zweites Seitenteilelement (120), die beidseitig neben der Türöffnung angeordnet sind, sowie ein Oberlichtelement (130), das oberhalb der Türöffnung fest zwischen den beiden Seitenteilelementen (110, 120) angeordnet ist, umfasst,
**dadurch gekennzeichnet, dass**
die Seitenteilelemente (110, 120), das Oberlichtelement (130) und das Türelement (140) sowohl innenflächig als auch außenflächig zueinander flächenbündig sind und an der Türöffnung und/oder am Türelement (140) ein dreiseitig umlaufendes Dichtungselement (180) zur Schalldämmung angeordnet ist, wobei zur Ausbildung eines Einbauraums für das Dichtungselement (180) vorgesehen ist, dass das Oberlichtelement (130) aus einem 3-fach-Verbundglas gefertigt und mit einem Falzwechsel ausgebildet ist, derart, dass dessen äußere Glasscheibe (132) beidseitig (a, b) über die mittlere und innere Glasscheibe (133, 131) übersteht, wodurch Gegenfalze für die Verbindung mit den Seitenteilelementen (110, 120) gebildet sind, und dass dessen innere Glasscheibe (131) nach unten (c) über die mittlere und äußere Glasscheibe (133, 132) übersteht, wodurch ein Gegenfalz für das Türelement (140) gebildet ist.

2. Ganzglas-Türanlage (100) nach einem der vorhergehenden Ansprüche, **dadurch gekennzeichnet, dass**
die Seitenteilelemente (110, 120) an ihren der Türöffnung und dem Oberlichtelement (130) zugewandten Rändern mit durchgängigen Falzen ausgebildet sind.

3. Ganzglas-Türanlage (100) nach einem der vorhergehenden Ansprüche, **dadurch gekennzeichnet, dass**
die Seitenteilelemente (110, 120) aus 2-fach-Verbundglas gefertigt sind.

4. Ganzglas-Türanlage (100) nach einem der vorhergehenden Ansprüche 1 bis 3,
**dadurch gekennzeichnet, dass**
das Türelement (140) aus 2-fach-Verbundglas gefertigt ist, wobei die äußere Glasscheibe (142) flächengrößer ausgebildet ist als die innere Glasscheibe (141) und dreiseitig umlaufend über die innere Glasscheibe (141) übersteht, sodass ein dreiseitig umlaufender Falz gebildet ist.

5. Ganzglas-Türanlage (100) nach einem der vorhergehenden Ansprüche 1 bis 3,
**dadurch gekennzeichnet, dass**
das Türelement (140) aus 3-fach-Verbundglas gefertigt ist, wobei die äußere Glasscheibe flächengrößer ausgebildet ist als die mittlere und innere Glasscheibe und dreiseitig umlaufend über die mittlere und innere Glasscheibe übersteht, sodass ein dreiseitig umlaufender Falz gebildet ist.

6. Ganzglas-Türanlage (100) nach Anspruch 5,
**dadurch gekennzeichnet, dass**
die mittlere Glasscheibe des Türelements (140) aus Bruchglas besteht.

7. Ganzglas-Türanlage (100) nach einem der vorhergehenden Ansprüche, **dadurch gekennzeichnet, dass**
die Seitenteilelemente (110, 120), das Oberlichtelement (130) und das Türelement (140) mit gleichen Verbundglasdicken ausgebildet sind.

8. Ganzglas-Türanlage (100) nach einem der vorhergehenden Ansprüche, **dadurch gekennzeichnet, dass**
das Türelement (140) mittels wenigstens zwei Türbändern (150) schwenkbar an einem der Seitenteilelemente (120) befestigt ist, wobei die Türbänder (150) für eine flächenbündige Ausrichtung zwischen dem Türelement (140) und dem Seitenteilelement (120) ausgebildet sind.

9. Ganzglas-Türanlage (100) nach einem der vorhergehenden Ansprüche, **dadurch gekennzeichnet, dass**
diese einen Schalldämmwert von mindesten 35 dB aufweist.

## Claims

1. All-glass door system (100) for indoor use, with a glass wall (101) composed of laminated glass elements, which comprises a frameless door opening, and a frameless door element (140) made of laminated glass arranged in it in such a way that it can be swivelled,
wherein the glass wall (101) comprises a first lateral-part element (110) and a second lateral-part element (120), which are arranged on both laterals next to the door opening, and a fanlight element (130), which is firmly arranged above the door opening between the two lateral-part elements (110, 120),
**characterized in that**
the lateral-part elements (110, 120), the fanlight element (130) and the door element (140) are flush with each other both on the internal surface as well as the external surface and, at the door opening and/or on the door element (140), a sealing element (180) running around three sides is arranged for sound insulation, wherein, for the formation of an installation space for the sealing element (180), it is provided that the fanlight element (130) is made of a triple-laminated glass and formed with a rebate transition in such a way that its outer glass plate (132) protrudes on both sides (a, b) over the middle and inner glass plate (133, 131), whereby counter-rebates are formed for the connection with the lateral-part elements (110, 120), and that its inner glass plate (131) protrudes downwardly (c) over the middle and outer glass plate (133, 132), whereby a counter-rebate for the door element (140) is formed.

2. All-glass door system (100) according to any one of the preceding claims,
**characterized in that**
the lateral-part elements (110, 120) are formed on their edges facing the door opening and the fanlight element (130) with continuous rebates.

3. All-glass door system (100) according to any one of the preceding claims,
**characterized in that**
the lateral-part elements (110, 120) are made of double-laminated glass.

4. All-glass door system (100) according to any one of the preceding claims 1 to 3,
**characterized in that**
the door element (140) is made of double-laminated glass, wherein the outer glass plate (142) is larger than the inner glass plate (141) and protrudes around on three sides over the inner glass plate (141) in such a way that a rebate is formed running around on three sides.

5. All-glass door system (100) according to any one of the preceding claims 1 to 3,
**characterized in that**
the door element (140) is made of triple-laminated glass, wherein the outer glass plate is larger than the middle and inner glass plate and protrudes around on three sides over the middle and inner glass plate in such a way that a rebate is formed running around on three sides.

6. All-glass door system (100) according to Claim 5,
**characterized in that**
the middle glass plate of the door element (140) is made of cullet.

7. All-glass door system (100) according to any one of the preceding claims,
**characterized in that**
the lateral-part elements (110, 120), the fanlight element (130) and the door element (140) are designed with the same laminated glass thicknesses.

8. All-glass door system (100) according to any one of the preceding claims,
**characterized in that**
the door element (140) is attached to one of the lateral-part elements (120) by means of at least two door hinges (150) in a swivelling manner, wherein the door hinges (150) are configured for a flush alignment between the door element (140) and the lateral-part element (120).

9. All-glass door system (100) according to any one of the preceding claims,
**characterized in that**
it exhibits a sound insulation value of at least 35 dB.

## Revendications

1. Dispositif de porte (100) en verre intégral, destiné à l'intérieur, doté d'une paroi en verre (101) composée d'éléments en verre composite, qui comporte une embrasure de porte et un élément de porte (140) en verre composite, dépourvu de cadre, qui y est placé de manière pivotante,
la paroi en verre (101) comprenant un premier élément latéral partiel (110) et un deuxième élément latéral partiel (120), qui sont placés de part et d'autre à côté de l'embrasure de porte, ainsi qu'un élément d'imposte (130), qui au-dessus de l'embrasure de porte, est placé de manière fixe entre les deux éléments latéraux partiels (110, 120),
**caractérisé en ce**
**qu'**aussi bien par la surface intérieure que par la surface extérieure, les éléments latéraux partiels (110, 120), l'élément d'imposte (130) et l'élément de porte (140) sont à surface affleurante et en ce que sur l'embrasure de porte et/ou sur l'élément de porte (140), un élément d'étanchéité (180) périphérique sur trois côtés est placé pour assurer l'insonorisation, pour créer un espace de montage pour l'élément d'étanchéité (180) étant prévu que l'élément d'imposte (130) soit fabriqué en un verre composite triple et soit conçu avec un changement de feuillure, de telle sorte que la vitre extérieure (132) déborde de part et d'autre (a, b) par-dessus la vitre (133, 131) centrale et intérieure, de sorte à créer des contre-feuillures pour l'assemblage avec les éléments latéraux partiels (110, 120) et de sorte que sa vitre intérieure (131) déborde vers le bas (c), par-dessus la vitre (133, 132) centrale et extérieure, de sorte à créer une contre-feuillure pour l'élément de porte (140).

2. Dispositif de porte (100) en verre intégral selon l'une quelconque des revendications précédentes,
**caractérisé en ce que**
sur leurs bords qui font face à l'embrasure de porte et à l'élément d'imposte (130), les éléments latéraux partiels (110, 120) sont conçus avec des feuillures continues.

3. Dispositif de porte (100) en verre intégral selon l'une quelconque des revendications précédentes,
**caractérisé en ce que**
les éléments latéraux partiels (110, 120) sont fabriqués en verre composite double.

4. Dispositif de porte (100) en verre intégral selon l'une quelconque des revendications précédentes 1 à 3,
**caractérisé en ce que**
l'élément de porte (140) est fabriqué en verre composite double, la vitre extérieure (142) étant conçue avec une surface supérieure à celle de la vitre intérieure (141) et débordant de manière périphérique sur trois côtés par-dessus la vitre intérieure (141), de sorte à créer une feuillure périphérique sur trois côtés.

5. Dispositif de porte (100) en verre intégral selon l'une quelconque des revendications précédentes 1 à 3,
**caractérisé en ce que**
l'élément de porte (140) est fabriqué en verre composite triple, la vitre extérieure étant conçue avec une surface supérieure à celle de la vitre centrale et intérieure et débordant de manière périphérique sur trois côtés par-dessus la vitre centrale et intérieure, de sorte à créer une feuillure périphérique sur trois côtés .

6. Dispositif de porte (100) en verre intégral selon la revendication 5, **caractérisé en ce que**
**en ce que** la vitre centrale de l'élément de porte (140) est constituée de calcin.

7. Dispositif de porte (100) en verre intégral selon l'une quelconque des revendications précédentes,
**caractérisé en ce que**
les éléments latéraux partiels (110, 120), l'élément d'imposte (130) l'élément de porte (140) sont conçus avec des épaisseurs identiques du verre composite.

8. Dispositif de porte (100) en verre intégral selon l'une quelconque des revendications précédentes,
**caractérisé en ce que**
l'élément de porte (140) est fixé de manière pivotante sur l'un des éléments latéraux partiels (120) au moyen d'au moins deux paumelles (150), les paumelles (150) étant conçues pour un alignement à fleur de surface entre l'élément de porte (140) et l'élément latéral partiel (120).

9. Dispositif de porte (100) en verre Intégral selon l'une quelconque des revendications précédentes,
**caractérisé en ce**
**qu'**il présente un coefficient d'insonorisation d'au moins 35 dB.
